## Europäisches Patentamt
## European Patent Office
## Office européen des brevets

(19)

(11) Numéro de publication: **0 210 895**
**B1**

(12)
# FASCICULE DE BREVET EUROPÉEN

(45) Date de publication du fascicule du brevet: **23.11.88**

(51) Int. Cl.⁴: **F 22 B 37/18,** F 22 B 37/22, **G 21 C 1/08**

(21) Numéro de dépôt: **86401465.9**

(22) Date de dépôt: **02.07.86**

(54) Générateur de vapeur à distributeur, notamment pour centrale nucléaire.

(30) Priorité: **02.07.85 FR 8510086**
**29.01.86 FR 8601259**

(43) Date de publication de la demande:
**04.02.87 Bulletin 87/6**

(45) Mention de la délivrance du brevet:
**23.11.88 Bulletin 88/47**

(84) Etats contractants désignés:
**BE CH DE GB IT LI NL SE**

(56) Documents cité:
**BE-A-828 942**
**DE-C-123 537**
**FR-A-1 433 888**
**GB-A-381 889**
**GB-A-983 620**
**US-A-1 672 617**
**US-A-1 887 130**

(73) Titulaire: **FRAMATOME, Tour Fiat 1 place de la Coupole, F-92400 Courbevoie (FR)**

(72) Inventeur: **Pascal, Yves, 120, Avenue Salvador Allende, F-92000 Nanterre (FR)**
Inventeur: **Holcblat, Alain, 32- 34, rue Horace Vernet, F-94130 Issy- les- Moulineaux (FR)**
Inventeur: **Sundheimer, Patrick, 20, rue de Bourgogne, F-94100 Saint Maur- des- Fossés (FR)**

(74) Mandataire: **Fort, Jacques, CABINET PLASSERAUD 84, rue d'Amsterdam, F-75009 Paris (FR)**

## Description

L'invention concerne les générateurs de vapeur du type comprenant une enceinte de résistance à la pression contenant un faisceau de tubes d'échange et dont la partie supérieure constitue un ballon de vapeur, enceinte dans laquelle est placé un distributeur, généralement de forme torique, relié à une conduite d'amenée d'eau alimentaire traversant la paroi de l'enceinte et muni de passages de répartition destinés à l'écoulement de l'eau alimentaire dans l'enceinte. Elle trouve une application particulièrement importante dans les centrales nucléaires, et notamment dans les centrales utilisant un réacteur à eau sous pression (où elle est utilisable sur l'alimentation des générateurs de vapeur) ou à eau bouillante (où elle est utilisable sur l'alimentation en eau du circuit de refroidissement).

Les générateurs de vapeur des réacteurs à eau sous pression comportent fréquemment un distributeur en forme d'anneau, dont la forme se rapproche d'un tore à axe vertical ou avec des lobes, alimenté par une conduite sensiblement horizontale. Lors du fonctionnement normal du réacteur, la surface libre de l'eau dans l'enceinte est située au-dessus de la conduite et du distributeur et la vitesse de l'eau dans la conduite est relativement élevée. Le fonctionnement est alors satisfaisant. Mais il peut au contraire être perturbé dans diverses conditions temporaires exceptionnelles.

En particulier, diverses phases transitoires de fonctionnement conduisent à l'apparition de coups de bélier provoquant des surpressions dommageables. C'est notamment le cas lorsque le niveau d'eau dans le générateur de vapeur (par exemple en cas d'arrêt à chaud) descend au-dessous du niveau de la tuyauterie d'eau alimentaire. Le distributeur est alors dénoyé. Si cette situation dure, le distributeur et la conduite se vident et se remplissent de vapeur saturée. Lors de la remontée en puissance, de l'eau sous-saturée est envoyée par la conduite: elle provoque une condensation brutale de la vapeur, donc une dépression puis la formation d'une onde de pression qui remonte vers la conduite sous forme d'un coup de bélier.

On à déjà tenté d'écarter ce problème en empêchant le distributeur et/ou la conduite de se vider. Pour cela, on a remplacé les trous de distribution classiquement ménagés à la partie inférieure du distributeur par des tubes en crosse raccordés à la partie supérieure du distributeur (US-A-4 502 419). Cette disposition résout le problème, mais elle est complexe et il est difficile de l'appliquer sur des générateurs de vapeur existants.

On a également cherché à écarter le problème en utilisant un générateur du type ci-dessus défini qui comporte, de plus, au moins un déflecteur situé dans une portion horizontale de la conduite (voir BE-A-828 942). Ce déflecteur est destiné à éviter le passage de vapeur provenant du générateur et à réduire les possibilités de coup de bélier Le déflecteur comprend un diaphragme inférieur, un diaphragme supérieur dans le tronçon horizontal et, éventuellement, un diaphragme annulaire monté transversalement, en aval du diaphragme inférieur par rapport au sens normal d'écoulement de l'eau.

Cette dispositition limite le passage de vapeur depuis le générateur mais ne peut l'empêcher complètement.

Un autre problème est constitué par la stratification thermique de l'eau d'alimentation lors du fonctionnement à très faible charge. Ce phénomène est décrit notamment dans l'article "Loading conditions in horizontal feed water pipes of LWRs influenced by thermal shock and thermal stratification effects", par M. Miksch et autres, NUCLEAR ENGINEERING AND DESIGN, 84 (1985), 179-187. Ce phénomène est aggravé sur les générateurs de vapeur équipés, d'une part d'une alimentation en eau préchauffée utilisée à charge normale, d'autre part d'une alimentation en eau froide utilisée en situation accidentelle et à très faible charge. Dans cette dernière situation, un faible débit d'eau alimentaire froide est injecté dans la conduite pleine d'eau à la température de fonctionnement du générateur de vapeur. Même si des diaphragmes du genre décrit dans le document DE-A-828 942 sont prévus, l'eau froide ne se mélange pas à l'eau chaude, mais forme une couche distincte au fond de la conduite car la vitesse d'écoulement est faible. Cette stratification maintient un gradient de température élevé entre la partie inférieure et la partie supérieure de la paroi de la conduite, ce qui engendre des contraintes thermiques de nature à provoquer un fissuration, y compris dans la soudure de raccordement de la conduite à l'enceinte. Ce phénomène est encore aggravé par la fatigue induite par les oscillations de l'interface entre les couches.

Les tubes en crosse utilisés pour atténuer le phénomène de coup de bélier ne réduisent pas de façon appréciable ce second phénomène, ce qui semble indiquer qu'il est entretenu par l'échange thermique dû à la convexion naturelle entre l'eau chaude occupant le ballon et l'intérieur de la conduite. On a fait diverses tentatives pour résoudre ce second problème. L'une consiste à introduire l'eau alimentaire dans la conduite par l'intermédiaire d'un déversoir annulaire débouchant dans une boîte à eau où se produit un certain mélange. On a également proposé de prévoir, sur la face interne d'un coude de la conduite, une saillie de faible hauteur, annulaire ou en spirale, pour augmenter la turbulence de l'écoulement. Un tel dispositif n'a qu'une efficacité très faible: en effet, lorsque le débit est faible, c'est-à-dire lorsqu'on recherche un mélange, le filet d'eau froide d'alimentation se contente de sauter l'obstacle ainsi constitué.

Des problèmes similaires se posent lors de l'exploitation des réacteurs à eau bouillante et conduisent notamment à des fissurations.

L'invention vise à fournir des moyens permettant d'écarter, au moins dans une large mesure, les problèmes ci-dessus des générateurs de vapeur, ou du moins le problème du coup de bélier, et ce en ne mettant en oeuvre que des moyens simples, n'imposant qu'une faible perte de charge à l'écoulement, purement statiques, et dont il est possible d'équiper un générateur de vapeur existant sans difficultés majeures.

Dans ce but, l'invention propose notamment un générateur de vapeur dont ladite conduite contient, dans une portion horizontale, au moins un déflecteur comprenant un moyeu axial et plusieurs aubes hélicoïdales reliant le moyeu à la paroi de la conduite et dont la longueur représente au moins un demi-pas d'enroulement.

Lorsqu'on cherche uniquement à éviter la vidange de la conduite en cas de dénoyage du distributeur, il suffit de prévoir un seul déflecteur hélicoïdal, placé dans la conduite ou entre le distributeur et la traversée de l'enceinte ou juste en amont de celle-ci. Les aubes auront une longueur et un pas tels que le point bas de la partie la plus haute de chaque canal inter-aubes soit au-dessus du point haut de la section la plus basse du même canal. On pourra avantageusement prévoir six aubes ayant un développement angulaire autour de l'axe compris entre un tour et un tour et demi.

Lorsque l'on souhaite également réaliser un mélange évitant la stratification thermique, un second déflecteur peut être prévu, cette fois dans la partie de la conduite qui est extérieure à l'enceinte. Ce second déflecteur, placé en amont du premier et de la traversée de l'enceinte, pourra comporter des aubes dont le développement angulaire est d'un demi-tour seulement. Il pourra avoir quatre aubes régulièrement réparties autour de l'axe. Les deux déflecteurs auront avantageusement des aubes au même pas.

Dans une variante de réalisation, les deux déflecteurs peuvent être combinés et montés sur un même moyeu. Dans tous les cas, la partie avant du déflecteur unique ou de celui des déflecteurs qui est en amont sera placée longitudinalement, de façon à n'imprimer que progressivement un mouvement en vrille à l'écoulement.

Dans un autre cas encore, le déflecteur est uniquement destiné à éviter la stratification thermique. Il suffit alors que les aubes aient un développement angulaire d'un demi-tour au moins. Ce n'est que si on souhaite éviter la vidange de la conduite en cas de dénoyage du distributeur, que les aubes doivent avoir une longueur et un pas tels que le point bas de la partie la plus haute de chaque canal inter-aube soit au-dessus du point haut de la section la plus basse du même canal, ce qui implique un développement angulaire autour de l'axe d'au moins un tour.

Dans tous les cas, on imposera avantageusement à la partie centrale de l'écoulement une perte de charge nettement supérieure à celle provoquée par les aubes hélicoïdales à la périphérie de l'écoulement.

Dans la pratique, on sera souvent amené à donner aux aubes un pas d'enroulement compris entre 2 et 5 fois le diamètre de la conduite et, au moyeu, un diamètre compris entre 0,25 et 0,5 fois le diamètre de la conduite.

Dans un mode particulier de réalisation, une seconde hélice est interposée entre la première et le moyeu. Dans le cas où l'on recherche uniquement une anti-stratification, les deux hélices auront souvent des sens d'enroulement différents. Dans le cas au contraire où l'on recherche à réduire les coups de bélier, les sens d'enroulement pourront être identiques.

Le moyeu présente une forme allant en s'évasant le l'avant vers l'arrière, dans le sens normal l'écoulement et, en cas de stratification, tend à remonter la lame d'eau inférieure au plus près de la génératrice supérieure de la conduite en la mélangeant à l'eau chaude. Le moyeu peut notamment dans ce cas avoir une forme conique ou en ogive.

L'invention sera mieux comprise à la lecture de la description qui suit de modes particuliers d'exécution, donnés à titre d'exemples non limitatifs. La description se réfère aux dessins qui l'accompagnent, dans lesquels:

- la Figure 1 est une vue schématique en plan du distributeur d'eau alimentaire d'un générateur de vapeur et de sa conduite d'alimentation, équipé de moyens suivant l'invention,

- la Figure 2 est une vue en élévation d'un des déflecteurs montés dans la conduite de la Figure 1, une seule aube étant représentée,

- la Figure 3 est une vue de gauche du distributeur de la Figure 2,

- la Figure 4 est un schéma montrant le siphon équivalent à l'un des canaux inter-aubes du déflecteur de la Figure 2,

- les Figures 5 et 6, similaires aux Figures 2 et 3, montrent le second déflecteur équipant la conduite montrée en Figure 1,

- les Figures 7 et 8 sont des schémas de principe montrant des tronçons de conduite d'alimentation munis d'ailettes d'échange thermique permettant de réduire la stratification,

- les Figures 9 et 10 sont des vues de droite des Figures 7 et 8, respectivement,

- la Figure 11, similaire à la Figure 1, montre un générateur de vapeur et de sa conduite d'alimentation, équipé de moyens suivant l'invention,

- la Figure 12 est une vue en perspective, depuis l'avant, montrant une fraction de conduite d'alimentation équipée de moyens suivant un autre mode de réalisation,

- la Figure 13 est une vue en élévation du déflecteur de la Figure 12,

- les Figures 14 et 15 montrent encore un autre mode de réalisation (une seule aube étant montré sur la Figure 14),

- la Figure 16 est une vue schématique en élévation montrant l'application de l'invention à un réacteur à eau bouillante.

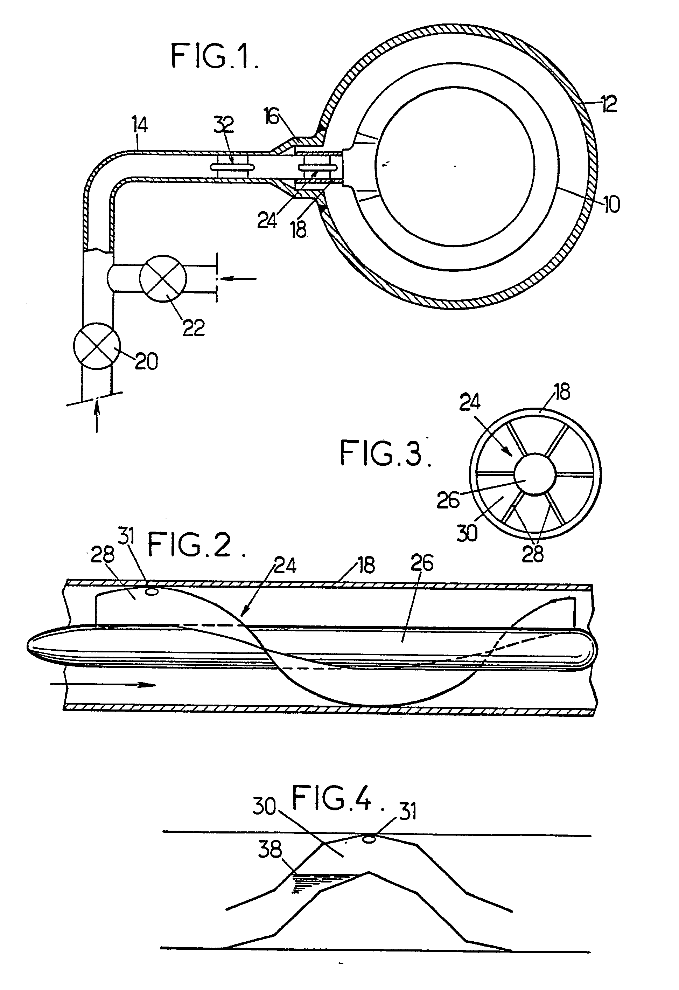

Le distributeur et la conduite d'alimentation montrés en Figure 1 sont notamment utilisables dans un générateur de vapeur pour centrale nucléaire à réacteur à eau sous pression, notamment à un générateur ayant la constitution générale montrée dans le document FR-A-2 333 200 déjà mentionné. Le distributeur 10 est constitué par un anneau qui, dans le mode de réalisation illustré, est de forme torique. Mais une forme à lobes serait également possible, ce distributeur est placé dans la partie haute d'une enceinte 12 de résistance à la pression, coaxialement à celle-ci. L'eau s'écoule du distributeur dans l'enceinte par des passages régulièrement répartis, qui peuvent être soit de simples orifices, soit des tubes en crosse. La conduite 14 d'amenée d'eau alimentaire au distributeur 10 présente une partie droite et horizontale fixée à un manchon 16 de traversée de l'enveloppe 12. Elle se prolonge par un tronçon 18 de liaison avec le distributeur 10, formant té de raccordement.

La conduite 14 est munie d'une alimentation principale, susceptible d'être interrompue à l'aide d'une vanne 20, qui reçoit de l'eau déjà préchauffée, et une conduite d'amenée d'une alimentation en eau de secours, également munie d'une vanne 22 qui est fermée en fonctionnement normal.

L'échangeur comprend un premier déflecteur 24 placé dans le tronçon 18 et dont la fonction est d'empêcher la conduite de se vider en cas d'interruption de l'alimentation. Dans ce but, le déflecteur 24 comprend un moyeu 26 muni d'aubes régulièrement réparties 28 enroulées autour du moyeu. Chaque aube 28 présente une partie avant hélicoïdale et une partie arrière de redressement de l'écoulement dont le plan tangent au bord de fuite est parallèle à l'axe. Ces aubes sont au nombre d'au moins quatre, et de six dans le mode de réalisation représenté. Chacune présente une forme d'hélicoïde à pas constant.

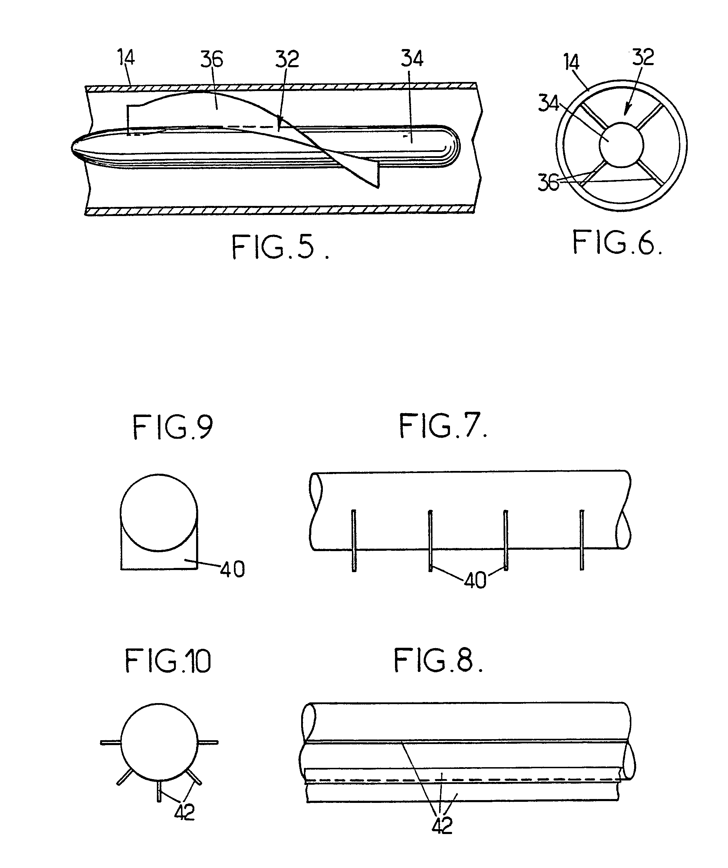

Il est nécessaire que le point bas de la partie la plus haute de chaque canal inter-aubes, tel que le canal 30 schématisé en Figure 4, soit au-dessus du point haut de la section la plus basse du même canal, ce qui exige que le rapport entre la longueur de chaque aube et le pas soit suffisant. Dans la pratique, une longueur comprise entre un pas et un pas et demi sera satisfaisante. Afin de permettre au siphon que constitue l'hélice de se désamorcer, des moyens de communication sont ménagés entre les veines hélicoïdales délimitées par au moins celle des aubes qui passe en haut de la conduite en partie ouverte. Dans le mode de réalisation illustré, ces moyens sont constitués par un trou 31 percé à la partie haute d'une aube 28, là où cette aube passe au point haut de la conduite. Quand le niveau descend après avoir atteint la génératrice supérieure du moyeu, le trou de désamorçage 31 équilibre les pressions de vapeur en amont et en aval de l'aube. Le niveau dans la partie haute du canal inter-aube limité par l'aube 28 percée du trou baisse en même temps que le niveau aval. Dès que ce dernier atteint le moyeu, les niveaux se stabilisent jusqu'à vidange complète de la conduite en aval du déflecteur.

La perte de charge imprimée par le déflecteur 24 est une fonction croissante de l'inclinaison des aubes par rapport à l'axe de la conduite. Mais l'encombrement longitudinal du déflecteur est d'autant plus important que le pas est plus long. Par ailleurs, le nombre de pas nécessaires dépend du nombre d'aubes. On sera en conséquence amené à adopter un compromis, consistant à adopter l'inclinaison la plus faible possible et le nombre d'aubes minimum compatibles avec la longueur disponible.

L'échangeur montré en Figure 1 comprend également un second déflecteur 32, placé en amont du premier, dans le tronçon de conduite 14, hors de l'enceinte 12. Ce second déflecteur est destiné à remplir la fonction de mélangeur contrariant la stratification. Le déflecteur 32 comprend un moyeu 34, de même diamètre que le moyeu 26, et plusieurs aubes (quatre dans le mode de réalisation illustré, reliant le moyeu à la paroi de la conduite 14. Chaque aube 36 présente une partie arrière hélicoïdale qui peut avoir une lèvre de fuite redressée avantageusement au même pas que les aubes 28, et une partie avant de mise en rotation de l'écoulement, dont le plan tangent au bord d'attaque est parallèle à l'axe. On partage ainsi la conduite 14 en quatre canaux interaubes indépendants. Chaque aube a une longueur correspondant à un demi-tour d'hélice.

Dans le cas où le déflecteur 32 est omis, ce seront les aubes 28 qui comporteront en plus une portion avant de mise en rotation progressive de l'écoulement.

Le rôle du déflecteur 32 lorsque la conduite est alimentée par un liquide formé de deux composants de masse volumique différente, ou encore quand on injecte, par la conduite, un liquide de masse volumique différente de celle du liquide qui l'emplissait auparavant, apparaît immédiatement quand le débit de liquide de forte masse volumique est faible, un écoulement stratifié tend à s'établir. Mais chaque aube 28 provoque un basculement d'un demi-tour, qui amène le composant lourd de la couche inférieure à la partie haute de la conduite, et inversement. L'ordre naturel des couches est donc inversé à la sortie du déflecteur 32, ce qui provoque un mélange par diffusion.

Le rôle du déflecteur 24 est d'empêcher la conduite de se vider par le distributeur en cas d'interruption de l'alimentation. Pour une dimension convenable du moyeu et un pas suffisamment court des aubes, le point bas de la section haute de chaque canal inter-aubes est situé au-dessus du point haut de la section basse, comme cela apparaît sur la Figure 4. En conséquence, chaque canal inter-aubes, qui fait au moins un tour complet, constitue un siphon. Dans chacun des canaux, la surface libre 38 va s'établir au niveau ou au-dessus de l'axe du moyeu, un bouchon d'eau subsistant à la partie basse et empêchant la vapeur de passer et donc la conduite de se vider.

Il serait possible d'utiliser, au lieu de deux déflecteurs séparés, un seul et même déflecteur de longueur suffisante, dont les aubes font un tour et demi au moins.

On voit que le montage des moyens qui viennent d'être décrit dans un échangeur existant est simple. Le déflecteur 32 peut être monté en dessoudant un tronçon de la conduite 14 et en le remontant ensuite, après insertion du déflecteur et cela sans intervention à l'intérieur du générateur de vapeur. Le déflecteur 24 peut également être inséré depuis l'extérieur, par exemple en le montant dans une chemise qui est glissée à travers le manchon 16.

Quel que soit le mode de réalisation adopté, le déflecteur 24 réduit la violence des coups de bélier provoqués par l'injection d'eau froide et protège au surplus la conduite 14 de la stratification persistante due à l'arrivée directe d'eau chaude en provenance de l'enceinte ou à l'échange thermique par convexion naturelle entre l'eau ou la vapeur du ballon et l'eau alimentaire. Le déflecteur 24 contrarie en effet l'établissement de la convexion naturelle au voisinage de la conduite et arrête la propagation des oscillations de température à l'interface entre la couche froide et la couche chaude.

On voit qu'on réalise ainsi un dispositif purement statique et de forme hydrodynamique, donc ayant une longue durée de vie, et n'imposant qu'une faible perte de charge à l'écoulement en régime normal.

La stratification peut être contrariée encore davantage en munissant la partie inférieure du distributeur 10 et du tronçon 18 constituant té d'alimentation d'ailettes d'augmentation des transferts thermiques. Ces ailettes peuvent avoir la forme d'arceaux 40 régulièrement répartis (Figures 7 et 9) ou de plats longitudinaux 42 soudés le long de génératrices, à la partie inférieure du té. Du fait que ces ailettes augmentent les échanges thermiques à la partie inférieure du distributeur, elles tendent à diminuer l'écart de température entre les couches froides et chaudes.

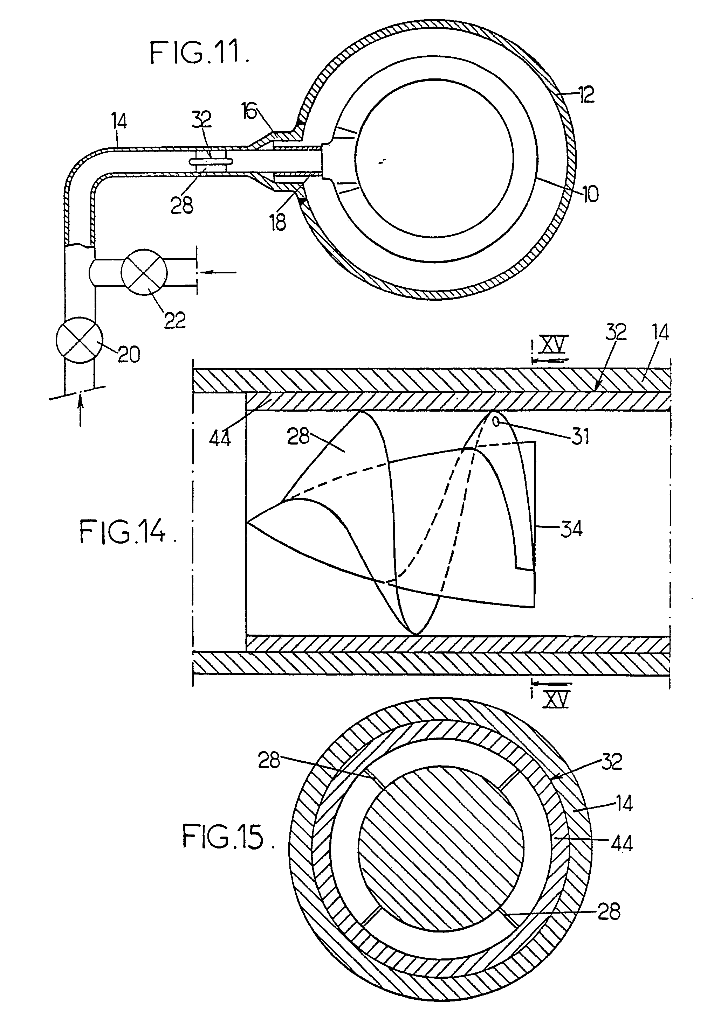

L'échangeur montré en Figure 11 se différencie de celui de la Figure 1 en ce qu'il comprend un seul déflecteur 32, placé dans le tronçon de conduite 14, hors de l'enceinte 12. Ce déflecteur est destiné à remplir au moins la fonction de mélangeur contrariant la stratification.

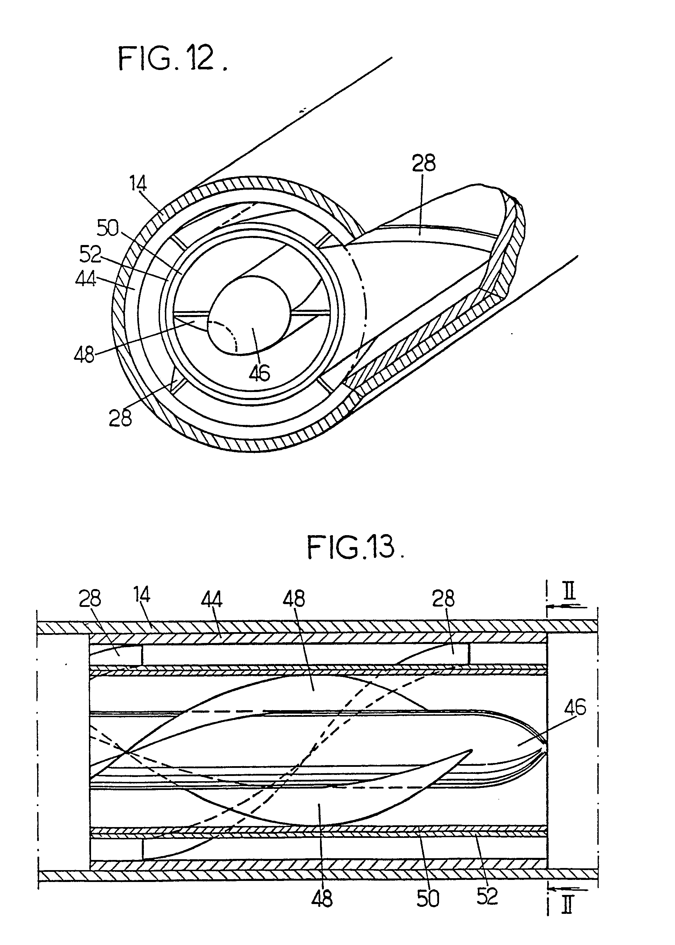

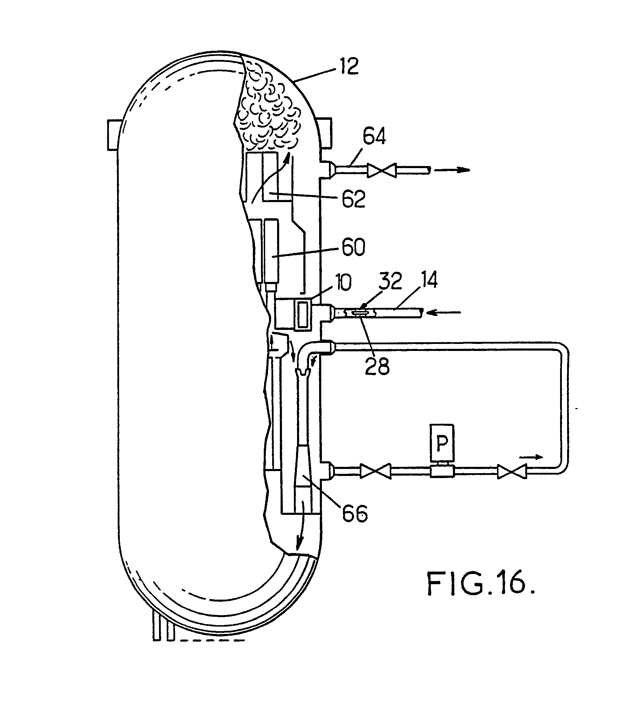

Le déflecteur montré en Figures 12 et 13 comporte une manchette externe 44 pouvant constituer une enveloppe de protection thermique, dont le diamètre extérieur correspond au diamètre intérieur de la conduite 14, ce qui permet de mettre en place le déflecteur en bloc dans la conduite 14 avec une liaison étanche. Le déflecteur peut être considéré comme comportant un moyeu 46 ou noyau central et des aubes 28 régulièrement réparties, enroulées autour du moyeu et fixées à la manchette 44. Chaque aube 28 présente une partie courante hélicoïdale et, éventuellement, une partie avant et/ou une partie arrière de redressement de l'écoulement, dans laquelle l'aube passe d'une forme hélicoïdale à une forme radiale. Pour permettre aux siphons que constituent les aubes de se désarmorcer, des moyens de communication peuvent être ménagés entre les veines hélicoïdales délimitées par au moins celle des aubes 28 qui passe en haut de la conduite. Ces moyens peuvent se limiter à un simple trou (non représenté). Si les aubes font plus d'un tour, le passage sera généralement prévu au point haut le plus en aval.

Le moyeu ou noyau central 46, de forme cylindrique, profilé à l'avant pour réduire la perte de charge. Ce noyau porte une hélice à au moins deux pales 48 dont l'arête externe est fixée à une cloison cylindrique 50. Les liaisons entre hélice 48 d'une part, noyau 46, et cloison 50 d'autre part, doivent être étanches pour éviter les passages d'air. Dans le mode de réalisation représenté en Figures 12 et 13, la paroi cylindrique 50 fixée aux ailettes 48 est glissée dans une cloison également cylindrique 52 qui, elle, est solidaire des aubes 28, reliées de façon étanche à la cloison 52 et à la manchette 44. Cette disposition facilite la fabrication du déflecteur en effet, on peut réaliser séparément deux sous-ensembles comportant, l'un la manchette 44, les aubes 28 et la cloison 52 et l'autre la partie interne, puis les emmancher l'un dans l'autre, la fixation pouvant se faire par manchonnage. Toutefois, on pourrait utiliser tout autre mode de montage garantissant l'étancheité de la liaison entre cloisons 50 et 52, par exemple un soudage en bout.

Lorsqu'on recherche seulement un effet d'antistratification, il suffit que les aubes 28 et les ailettes 48 aient une longueur correspondant à au moins un demi-tour. Les aubes 28 placées à la périphérie du déflecteur captent en totalité, canalisent la lame d'eau froide et la remontent au plus près de la génératrice supérieure de la conduite. Elles complètent donc l'effet de l'hélice à au moins deux aubes 48 qui ne permet de remonter l'eau froide qu'au niveau de la génératrice supérieure du noyau 46 lorsque l'épaisseur de la lame d'eau froide est faible.

On peut donner aux aubes 28 un sens d'enroulement opposé à celui des ailettes 48. Lorsque le déflecteur est prévu pour atténuer les coups de bélier, les aubes 28 et les ailettes 48 auront une longueur correspondant à 1 tour au moins, et avantageusement 1,5 tour.

Chaque aube 28 et chaque ailette 48 présentent une partie courante hélicoïdale et elles peuvent avoir une lèvre de fuite redressée et une partie avant de mise en rotation de l'écoulement, dont le plan tangent au bord d'attaque est parallèle à l'axe. On réduit ainsi les parties de charge. Dans le cas cependant où un second dispositif à ailettes hélicoïdales ayant un pas de même sens est placé dans la conduite à l'intérieur de l'enceinte, la lèvre de fuite du premier dispositif et la lèvre d'entré du second n'ont pas à être prévues.

Les aubes 48 doivent être prévues pour imposer au courant d'eau qui traverse l'espace annulaire compris entre le noyau 46 et la cloison 50 une perte de charge supérieure à celle provoquée par les aubes 28, de façon à favoriser le passage de l'eau froide le long des aubes 28.

Le déflecteur 32 des Figures 14 et 15 comporte un moyeu plein 34 en forme d'ogive, relié par quatre aubes 28 régulièrement réparties angulairement (dont une seule est montrée en Figure 14) à la manchette 44. Le déflecteur remonte la lame d'eau froide stratifiée éventuelle vers la génératrice supérieure de la conduite tout en la mélangeant à l'eau chaude. L'évasement du moyeu vers l'arrière provoque une diminution de la section de passage et donc une augmentation de vitesse qui favorise le mélange entre eau froide et eau chaude.

Lorsqu'un déflecteur du genre montré en Figures 14 et 15 est destiné uniquement à combattre la stratification, il suffit de deux aubes 28 d'un demi-tour au minimum. Dans la pratique, il est cependant préférable d'utiliser trois ou quatre aubes. Lorsqu'on cherche uniquement à atténuer les coups de bélier, un dispositif à deux aubes 28 d'au moins 1 tour chacune, sera utilisé. Enfin, lorsqu'on veut combattre les deux phénomènes, il est souhaitable d'utiliser un dispositif à quatre aubes faisant au moins un tour et avantageusement 1, 5 tours.

Pour assurer une bonne étancheité autour des aubes 28, la manchette 44 peut être constituée par enroulement à spires jointives d'une bande, puis soudage des spires entre elles.

Dans l'application de l'invention à un réacteur à eau bouillante (Figure 16), un déflecteur 32 est placé sur la conduite d'alimentation en eau 14, en amont de la traversée de la cuve 12 constituant enceinte de résistance à la pression. Le réacteur comporte encore un distributeur 10 placé au-dessous des séparateurs 60 et des sécheurs 62. La vapeur sort de la cuve par une tubulure 64. La circulation dans le réacteur lui-même est assurée par des boucles à éjecteurs 66, de façon classique.

L'invention peut aussi être appliquée à des générateurs de vapeur autres que ceux des centrales nucléaires.

## Revendications

1. Générateur de vapeur comprenant une enceinte (12) contenant un faisceau de tubes d'échange et dont la partie supérieure constitue un ballon de vapeur, dans laquelle est placé un distributeur (10) relié à une conduite (14) d'amenée d'eau alimentaire traversant la paroi de l'enceinte et muni de passages destinés à l'écoulement d'eau vers l'enceinte, ladite conduite contenant, dans une portion horizontale, au moins un déflecteur (24), caractérisé en ce que le déflecteur comprend un moyeu axial et plusieurs aubes hélicoïdales reliant le moyeu à la paroi de la conduite et dont la longueur représente au moins un demi-pas d'enroulement.

2. Générateur selon la revendication 1, caractérisé par des moyens de communication entre les veines hélicoïdales délimitées par les aubes, débouchant à la partie haute des veines.

3. Générateur selon la revendication 1 ou 2, caractérisé en ce que le déflecteur (24) est situé dans la conduite entre le distributeur et la traversée de l'enceinte (12).

4. Générateur selon la revendication 3, caractérisé en ce que ledit déflecteur (24) comporte au moins quatre aubes (28) régulièrement réparties, présentant un développement angulaire compris entre un tour et un tour et demi.

5. Générateur selon la revendication 3 ou 4, caractérisé en ce que ladite conduite contient un second déflecteur (32), placé en amont du premier déflecteur dont les aubes ont au moins un tour d'enroulement et de la traversée de l'enceinte, comprenant également un moyeu et plusieurs aubes hélicoïdales au même pas que les aubes du premier déflecteur.

6. Générateur selon la revendication 5, caractérisé en ce que les aubes du second déflecteur ont un développement angulaire approximativement d'un demi-tour.

7. Générateur selon la revendication 5 ou 6, caractérisé en ce que le second déflecteur comporte quatre aubes.

8. Générateur selon l'une quelconque des revendications 1 à 4, caractérisé en ce que le déflecteur est unique.

9. Générateur selon l'une quelconque des revendications précédentes, caractérisé en ce que les aubes du déflecteur unique ou celles du déflecteur placé le plus en amont présentent une partie avant dirigée longitudinalement.

10. Générateur selon l'une quelconque des revendications précédentes, caractérisé en ce que les aubes du déflecteur unique ou celles du déflecteur placé le plus en aval présentent à l'arrière des lèvres de sortie dans des plans radiaux.

11. Générateur de vapeur selon la revendication 1, caractérisé en ce que le moyeu est séparé des aubes par une paroi cylindrique (50) reliée aux aubes et une hélice (48) à au moins deux ailettes placée entre le moyeu et la paroi cylindrique, les ailettes ayant au moins un demi-tour d'enroulement.

12. Générateur de vapeur selon la revendication 11, caractérisé en ce que l'hélice et les aubes ont au moins un tour d'enroulement.

13. Générateur de vapeur selon la revendication 11 ou 12, caractérisé en ce que l'hélice et les aubes ont des sens d'enroulement différents.

## Patentansprüche

1. Dampferzeuger mit einem Behälter (12), der ein Bündel Wärmetauscherrohre aufweist und dessen oberer Teil ein Dampffaß bildet, in dem ein Verteiler (10) angeordnet ist, der an eine Speisewasserzufuhrleitung (14) angeschlossen ist, die die Wandung des Behälters durchquert und mit Durchgängen versehen ist, die für das Einströmen von Wasser in den Behälter bestimmt sind, wobei die Leitung in einem horizontalen Bereich mindestens einen Ablenker (24) aufweist, dadurch gekennzeichnet, daß der Abweiser eine axiale Habe und mehrere schraubenförmige Flügel aufweist, die die Habe mit der hohen Wandung verbinden und deren Länge sich mindestens über einen halben Windungsschritt erstreckt.

2. Dampferzeuger nach Anspruch 1, dadurch gekennzeichnet, daß die Verbindungen zwischen den durch die Flügel eingegrenzten schraubenförmigen Gängen im oberen Bereich der Gänge münden.

3. Dampferzeuger nach Anspruch 1 oder 2, dadurch gekennzeichnet, daß der Ablenker (24) in der Leitung zwischen dem Verteiler und dem Anschluß des Behälters (12) angeordnet ist.

4. Dampferzeuger nach Anspruch 3, dadurch gekennzeichnet, daß der Ablenker (24) mindestens vier gleichmäßig verteilte Flügel (28) aufweist, deren Winkelgang zwischen einer Umdrehung und anderthalb Umdrehungen liegt.

5. Dampferzeuger nach Anspruch 3 oder 4, dadurch gekennzeichnet, daß die Leitung einen zweiten Ablenker (32) aufweist, der stromauf bezüglich des ersten Ablenkers, dessen Flügel einen Winkelgang von mindestens einer Umdrehung haben und bezüglich des Behälteranschlusses liegt, der ebenfalls eine Habe und mehrere schraubenförmige Flügel aufweist, die dieselbe Schrittlänge wie die Flügel des ersten Ablenkers aufweisen.

6. Dampferzeuger nach Anspruch 5, dadurch gekennzeichnet, daß die Flügel des zweiten Ablenkers einen Winkelgang von näherungsweise einer halben Umdrehung haben.

7. Dampferzeuger nach Anspruch 5 oder 6, dadurch gekennzeichnet, daß der zweite Ablenker vier Flügel aufweist.

8. Dampferzeuger nach einem der Ansprüche 1 bis 4, dadurch gekennzeichnet, daß der Ablenker der einzige Ablenker ist.

9. Dampferzeuger nach einem der vorstehenden Ansprüche, dadurch gekennzeichnet, daß die Flügel des einzigen Ablenkers oder die des weiter stromauf gelegenen Ablenkers einen nach vorne gerichteten sich längserstreckenden Teil aufweisen.

10. Dampferzeuger nach einem der Vorstehenden Ansprüche, dadurch gekennzeichnet, daß die Flügel des einzigen Ablenkers oder die des weiter stromab gelegenen Ablenkers in ihrem hinteren Bereich in radialen Ebenen liegende Ausgangsschürzen aufweisen.

11. Dampferzeuger nach Anspruch 1, dadurch gekennzeichnet, daß die Habe von den Flügeln durch eine zylindrische Wand (50) getrennt ist, die an den Flügeln befestigt ist und dadurch, daß eine Schraube (48) mit mindestens zwei Flügeln, die zwischen der Habe und der Zylinderwand angeordnet ist, vorgesehen ist, wobei die Flügel einen Windungsgang von mindestens einer halben Umdrehung aufweisen.

12. Dampferzeuger nach Anspruch 11, dadurch gekennzeichnet, daß die Schraube und die Flügel mindestens einen Windungsgang von einer Umdrehung haben.

13. Dampferzeuger nach Anspruch 11 oder 12, dadurch gekennzeichnet, daß die Schraube und die Flügel unterschiedliche Wicklungsrichtungen aufweisen.

## Claims

1. Steam generator comprising an enclosure (12) containing a bundle of exchange tubes, whose upper portion constitutes a steam plenum within which is located a header (10) connected to a feed water delivery pipe (14) passing through the wall of the enclosure and provided with passages for flow of water toward the enclosure, said pipe containing, in a horizontal portion thereof, at least one deflector (24), characterized in that the deflector comprises an axial hub and a plurality of helical blades connecting the hub to the wall of the pipe and whose length represents at least one half of the winding pitch.

2. Generator according to claim 1, characterized by communication means between the helical flow channels defined by the blades, opening at the top part of the channels.

3. Generator according to claim 1 or 2, characterized in that the deflector (24) is situated in the pipe between the header and the location where the pipe projects through the enclosure (12).

4. Generator according to claim 3, characterized in that said deflector (24) comprises at least four evenly spaced apart blades (28), having an angular development of from one turn to one turn and a half.

5. Generator according to claim 3 or 4, characterized in that said pipe contains a second deflector (32) placed upstream of the first deflector whose blades have at least one winding turn and of the location where the pipe projects through the enclosure, also comprising a hub and a plurality of helical blades having the same pitch as the blades of the first deflector.

6. Generator according to claim 5, characterized in that the blades of the second deflector have an angular development of approximately half a turn.

7. Generator according to claim 5 or 6, characterized in that the second deflector comprises four blades.

8. Generator according to any one of claims 1 - 4, characterized in that there is a single deflector.

9. Generator according to any one of the preceding claims, characterized in that the blades of the single deflector or those of the deflector placed upstream have a longitudinally directed forward part.

10. Generator according to any one of the preceding claims, characterized in that the blades of the single deflector or those of the deflector located dowstream have outlet lips in radially directed planes.

11. Steam generator according to claim 1, characterized in that the hub is separated from the blades by a cylindrical partition (50) connected to the blades and a helix (48) having at least two vanes, located between the hub and the cylindrical partition, the vanes having a length representing at least one half of the winding pitch.

12. Steam generator according to claim 11, characterized in that the helix and the blades have a length representing at least one winding pitch.

13. Steam generator according to claim 11 or 12, characterized in that the helix and the blades have different winding directions.

FIG.1.

FIG.2.

FIG.3.

FIG.4.

FIG.5 .

FIG.6.

FIG.9

FIG.7.

FIG.10

FIG.8 .

FIG.11.

FIG.14.

FIG.15.

FIG. 12.

28

14

50

52

44

48

46

28

FIG. 13.

28    14    44    48    28    II

46

48    50    52    II

FIG.16.